# EUROPEAN PATENT SPECIFICATION

(11) **EP 2 553 050 B1**
(45) Date of publication and mention of the grant of the patent: **07.09.2016**
(21) Application number: 11763138.2
(22) Date of filing: 24.03.2011
(51) Int. Cl.: C10B 47/30, C10B 53/02, C10L 5/40, C10L 9/08, F26B 11/04, F26B 17/32, F26B 1/00, F26B 21/14

(54) **METHOD AND APPARATUS FOR TORREFACTION OF BIOMASS MATERIAL**
VERFAHREN UND VORRICHTUNG ZUR TORREFIZIERUNG EINES BIOMASSEMATERIALS
PROCÉDÉ ET APPAREIL DE TORRÉFACTION DE BIOMASSE

(30) Priority: 29.03.2010 SE 1050290
(43) Date of publication of application: 06.02.2013
(73) Proprietor: Torkapparater-Termisk Processutrustning AB, 104 40 Stockholm (SE)
(72) Inventor: Bojner, Ulf, S-114 57 Stockholm (SE)
(74) Representative: Ehrner & Delmar Patentbyrå AB
(86) International application number: PCT/SE2011/050332
(87) International publication number: WO 2011/123025

(56) References cited:
- WO-A1-2009/151367
- FI-A- 28 752
- FR-A- 508 736
- FR-A- 816 309
- JP-A- 2003 171 669
- KR-B1- 100 661 327
- US-A1- 2006 280 669

## Description

### Field of the invention

The present invention relates to a method and apparatus for torrefaction of biomass material at low temperature so as to obtain a product having high carbon content with possible hydrophobic characteristics.

### Background of the invention

Torrefaction of biomass material is known since long and the so formed product has high carbon content. WO2009151367 discloses a method for torrefaction of biomass material according to the preamble of claim 1 and an apparatus for torrefaction of biomass material according to the preamble of claim 5.

The torrefied product may be used to replace coal in many applications and has many advantages regarding handling properties. It is for instance hydrophobic and will thus have low moisture content. Moreover, it will not be affected by weather and wind and demands no particular storage conditions.

The torrefaction of biomass material is a mainly exothermic reaction starting at about 260°C and performed in an inert atmosphere, thus it is a gasification of the biomass material at low temperature. Since the reaction is in most cases exothermic the reaction velocity must be controlled. Normally this is done by cooling the jacket of the reactor. However, when performing torrefaction a pyrolytic gas is formed. This pyrolytic gas when cooled forms a sticky tar which will thus adhere to the inner surfaces of the reactor and interfere with the torrefied product so formed.

However, the Applicant has noted that when torrefaction of biomass material of a certain type it may be necessary to, instead of cooling, heat said material.

### Summary of the invention

The object with the invention is to provide a method and an apparatus by which the formation of sticky tar on the inner surfaces of the reactor is eliminated.

According to the invention this is achieved by a method for torrefaction of biomass material according to claim 1.

According to the invention this is also achieved by an apparatus for torrefaction of biomass material according to claim 5.

### Brief description of the drawings

The present invention is described below with reference to the accompanying drawings, on which
- Fig. 1 is a schematic view of an apparatus for torrefaction of biomass material according to the invention,
- Fig. 2 is a schematic sectional side view taken at line II-II in Fig. 3 of a reactor used in the apparatus in Fig. 1, and
- Fig. 3 is a schematic sectional end view taken at line III-III in Fig. 2 of the reactor in Fig. 2.

### Description of preferred embodiments

In the description below by biomass material is meant any materials having a suitable organic compound content, such as plant material, waste material, etc.

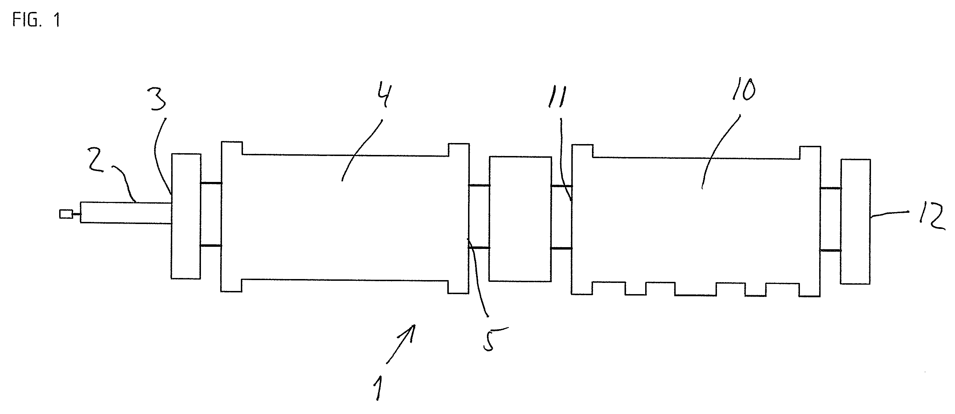

As seen in Fig. 1-3 an apparatus 1 for torrefaction of biomass material at low temperature comprises means 2 for feeding a finely divided biomass material to an inlet end 3 of at least one heater 4, preferably at least one tubular heater, and most preferably at least one rotating tubular heater, for drying and heating said biomass material. The heater 4 is connected at its outlet end 5 to an inlet end 11 of at least one torrefaction reactor 10. At an outlet end 12 of the reactor 10 suitable means (not shown) are arranged for on one hand collecting, cooling and transporting the so formed torrefied product to a suitable storage bunker (not shown) and on the other hand collecting possible formed process gas.

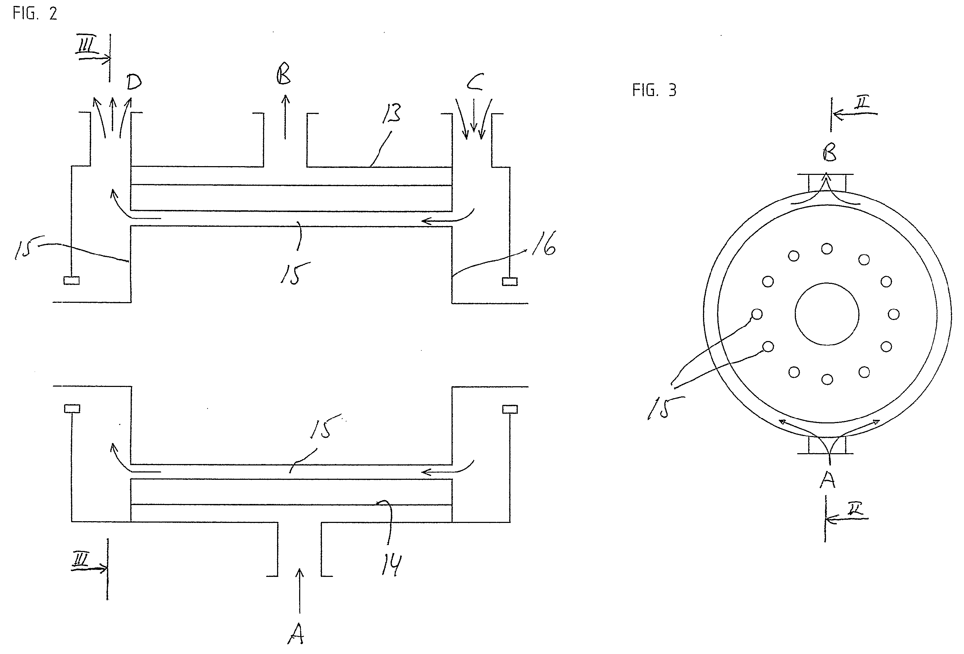

The reactor 10 is preferably a rotating reactor 10 having an external stationary casing 13 and internal rotating jacket 14 provided internally in the circumferential direction with regularly spaced cooling tubes 15 having a distance in the radial direction relative to the jacket (Fig. 2 and 3). When torrefying the biomass material in the reactor 10 the internal jacket 14 of the reactor 10 is adapted to be heated by a suitable heating fluid so as to torrefy the biomass material in an inert atmosphere, i.e. without any inlet of air or oxygen to the reactor. The treatment temperature of the reactor 10 lies within the interval of 250 to 320°C, preferably within the interval of 270 to 300°C.

As schematically seen in Fig. 2 and 3 a heating fluid is fed into the reactor preferably at its bottom at A and is released preferably at its top at B. The heating fluid is preferably heated gas. When so doing an exothermic reaction is started within the biomass material. To control the reaction velocity the biomass material has to be cooled. According to the invention this is done by the in the circumferential direction regularly spaced cooling tubes 15 which are adapted be cooled by suitable cooling fluid which is fed into the tubes at C of the reactor and released from the tubes at D of the reactor. More precisely, the in the circumferential direction regularly spaced cooling tubes 15 are so placed in the reactor 10 that they extend between respective ends 15,16 of the reactor and are located close to the inner surface of the internal jacket 14, so when the reactor with biomass material is rotated the biomass material will progressively cover the lowest cooling tubes in the reactor and will thereby be cooled. The torrefied product is preferably cooled in counter-current flow.

However, as mentioned above a pyrolytic gas is formed when torrefying the biomass material under these conditions. Therefore, the temperature of the inner surface of the internal rotating jacket 14 should be kept at a temperature above the liquefying temperature of the pyrolytic gas. Since the cooling tubes are cool pyrolytic gas will liquefy on the tubes and form a sticky tar. The torrefied product will thus adhere to the cooling tubes 15 but will be worn off as the cooling tubes pass through the torrefied product at the bottom of the rotating reactor.

Regarding the cooling of the cooling tubes 15 the cooling fluid is preferably feed only to the tubes partly or wholly in contact with the torrefied product, thus to the cooling tubes at the bottom of the reactor.

## Claims

1. A method for torrefaction of biomass material, comprising the steps of:
- providing a finely divided biomass material,
- feeding said finely divided biomass material to at least one heater (4) for drying and heating said biomass material,
- feeding said dried biomass material to at least one rotating torrefaction reactor (10), the treatment temperature of which is within the interval of 250 to 320°C, said reactor being provided with a heated internal rotating jacket (14)
**characterised in that** said reactor (10) is provided with in the circumferential direction regularly spaced internal cooling tubes (15), whereby said cooling tubes (15) are so arranged that at least some of them, during rotation of said at least one reactor, will be in contact with and cool the biomass material being torrefied.

2. The method according to claim 1, **characterized by** said torrefaction being made without the presence of air or oxygen.

3. The method according to claim 1 or 2, **characterized by** the treatment temperature of the torrefaction reactor (10) is within the interval of 270 to 300°C.

4. The method according to any of claims 1-3, **characterized by** feeding cooling fluid only to the cooling tubes (15) partly or wholly in contact with the biomass material being torrefied.

5. An apparatus (1) for torrefaction of biomass material comprising means (2) for feeding a finely divided biomass material to at least one heater (4) for drying and heating said biomass material, at least one torrefaction reactor (10) connected to said at least one heater, and means for collecting, cooling and transporting the so formed torrefied product to a suitable storage bunker, wherein the reactor (10) comprises a rotating reactor (10) suitable for a treatment temperature within the interval of 250 to 320°C, and having an external stationary casing (13) and a heated internal rotating jacket (14) **characterised in that** said rotating reactor (10) is provided with in the circumferential direction regularly spaced internal cooling tubes (15), and that the internal rotating jacket (14) of reactor (10) is adapted to be heated and the cooling tubes are adapted be cooled by feeding a cooling fluid to the same so as to cool the biomass material being torrefied.

## Patentansprüche

1. Verfahren zum Dörren von Biomassematerial, umfassend die folgenden Schritte:
- Bereitstellung eines fein gestückelten Biomassematerials,
- Zuführen des fein gestückelten Biomassematerials in wenigstens eine Heizvorrichtung (4) zum Trocknen und Erhitzen des Biomassematerials,
- Zuführen des getrockneten Biomassematerials in wenigstens einen rotierenden Dörrreaktor (10), wobei die Behandlungstemperatur davon im Bereich von 250 bis 320 °C liegt, wobei der Reaktor mit einem erwärmten inneren rotierenden Mantel (14) bereitgestellt ist,
**dadurch gekennzeichnet, dass** der Reaktor (10) mit in Umfangsrichtung in regelmäßigen Abständen angeordneten inneren Kühlrohren (15) bereitgestellt ist, wobei die Kühlrohre (15) derart angeordnet sind, dass wenigstens einige von ihnen während der Rotation des wenigstens einen Reaktors mit dem zu dörrenden Biomassematerial in Kontakt sind und es kühlen.

2. Verfahren nach Anspruch 1, **dadurch gekennzeichnet, dass** das Dörren ohne die Gegenwart von Luft oder Sauerstoff erfolgt.

3. Verfahren nach Anspruch 1 oder 2, **dadurch gekennzeichnet, dass** die Behandlungstemperatur des Dörrreaktors (10) im Bereich von 270 bis 300 °C liegt.

4. Verfahren nach einem der Ansprüche 1 - 3, **dadurch gekennzeichnet, dass** Kühlflüssigkeit nur den Kühlrohren (15) teilweise oder vollständig in Kontakt mit dem zu dörrenden Biomassematerial zugeführt wird.

5. Vorrichtung (1) zum Dörren von Biomassematerial, umfassend Mittel (2) zur Zuführung eines fein gestückelten Biomassematerials in wenigstens eine Heizvorrichtung (4) zum Trocknen und Erwärmen des Biomassematerials, wobei wenigstens ein Dörrreaktor (10) mit der wenigstens einen Heizvorrichtung verbunden ist, und Mittel zum Sammeln, Kühlen, und Transportieren des auf diese Weise gebildeten gedörrten Produktes in ein geeignetes Lagersilo, wobei der Reaktor (10) einen rotierenden Reaktor (10) umfasst, der für eine Behandlungstemperatur im Bereich von 250 bis 320 °C geeignet ist und eine externe feste Hülle (13) und einen erwärmten inneren rotierenden Mantel (14) aufweist, **dadurch gekennzeichnet, dass** der rotierende Reaktor (10) mit in Umfangsrichtung in regelmäßigen Abständen beabstandeten inneren Kühlrohren (15) bereitgestellt ist, und dass der innere rotierende Mantel (14) des Reaktors (10) angepasst ist, erwärmt zu werden, und die Kühlrohre angepasst sind, durch das Zuführen einer Kühlflüssigkeit dort gekühlt zu werden, damit das Biomassematerial, das gedörrt werden soll, gekühlt wird.

## Revendications

1. Procédé de torréfaction d'un matériau de biomasse, comprenant les étapes consistant à :
- disposer d'un matériau de biomasse finement divisé,
- introduire ledit matériau de biomasse finement divisé dans au moins une chaudière (4) pour sécher et chauffer ledit matériau de biomasse,
- introduire ledit matériau de biomasse séché dans au moins un réacteur de torréfaction rotatif (10), dont la température de traitement est située dans la plage allant de 250 à 320°C, ledit réacteur étant doté d'une chemise rotative interne chauffée (14),
**caractérisé en ce que** ledit réacteur (10) est doté, dans la direction circonférentielle, de tubes de refroidissement internes régulièrement espacés (15), lesdits tubes de refroidissement (15) étant agencés de façon qu'au moins certains d'entre eux, durant la rotation dudit au moins un réacteur, viennent en contact avec et refroidissent le matériau de biomasse qui est torréfié.

2. Procédé selon la revendication 1, **caractérisé en ce que** ladite torréfaction est mise en oeuvre en l'absence d'air ou d'oxygène.

3. Procédé selon la revendication 1 ou 2, **caractérisé en ce que** la température de traitement du réacteur de torréfaction (10) est située dans la plage allant de 270 à 300°C.

4. Procédé selon l'une quelconque des revendications 1 à 3, **caractérisé en ce que** le fluide de refroidissement est introduit uniquement dans les tubes de refroidissement (15) partiellement ou entièrement en contact avec le matériau de biomasse qui est torréfié.

5. Dispositif (1) pour la torréfaction d'un matériau de biomasse, comprenant des moyens (2) pour introduire un matériau de biomasse finement divisé dans au moins une chaudière (4) pour sécher et chauffer ledit matériau de biomasse, au moins un réacteur de torréfaction (10) connecté à ladite au moins une chaudière, et des moyens pour collecter, refroidir et transporter le produit torréfié ainsi formé vers une soute de stockage convenable,
dans lequel le réacteur (10) comprend un réacteur rotatif (10) adapté pour une température de traitement située dans la plage allant de 250 à 320°C, et ayant un boîtier fixe externe (13) et une chemise rotative interne chauffée (14),
**caractérisé en ce que** ledit réacteur rotatif (10) est doté, dans la direction circonférentielle, de tubes de refroidissement internes régulièrement espacés (15), et **en ce que** la chemise rotative interne (14) du réacteur (10) est adaptée pour être chauffée et les tubes de refroidissement sont adaptés pour être refroidis par l'introduction d'un fluide de refroidissement à ceux-ci afin que soit refroidi le matériau de biomasse qui est torréfié.
